# EUROPEAN PATENT APPLICATION

(11) **EP 1 745 944 A2**
(43) Date of publication of application: **24.01.2007**
(21) Application number: 06116703.7
(22) Date of filing: 06.07.2006
(51) Int. Cl.: B60C 9/00

(54) **Pneumatic tire with large filament cords**

(30) Priority: 18.07.2005 US 183511
(71) Applicant: THE GOODYEAR TIRE & RUBBER COMPANY, Akron, Ohio 44316-0001 (US)
(72) Inventor: Zelin, Michael Gregory, Canal Fulton, OH 44614 (US); Sinopoli, Italo Marziale, Canton, OH 44709 (US); Starinshak, Thomas Walter, Wadsworth, OH 44281 (US)
(74) Representative: Kutsch, Bernd

(57) **Abstract**

A pneumatic tire having a belt ply (28, 30) is disclosed wherein the ply cords are formed of multiple individual filaments, with at least one filament having a diameter ranging from 0.45 to 0.65 mm, and a tensile strength of at least -2000*D +4050 MPa, where D is the filament diameter in mm. The tire is preferably a radial medium truck tire.

## Description

### Field of the Invention

The present invention is directed to a pneumatic tire. More specifically, the present invention is directed to a pneumatic tire comprising a belt reinforcing ply wherein the steel cords of the belt ply have a filament diameter of 0.45 to 0.65 mm and a minimum tensile strength.

### Background of the Invention

For passenger vehicle tires, the belt plies of a tire perform multiple functions. Such functions include limiting tire growth, contributing to tire strength, achieving desirable foot print shape, stiffness characteristics affected tread wear, and, depending upon the structure of the cords therein, assisting in puncture resistance. To optimize the thickness of the belt ply and the desired strength of the belt ply, cords used to form the belt plies such as described in EP-A- 0 849 098 have conventionally been formed from filaments having a diameter in the range of 0.10 to 0.40 mm.

With the advent of steel filaments of greater tensile strength for given diameters, the industry has looked at various ways of using the greater tensile strength wires for reinforcement plies. These various methods have conventionally included reducing the wire diameter while using the same cord construction or using the same wire diameter while using fewer filaments to form the cord construction.

### Summary of the Invention

The present invention is directed to cord structures that take advantage of steel filaments having a very high tensile strength with acceptable cord fatigue strength.

The present invention is directed to a pneumatic tire having a belt ply wherein the ply cords are formed of multiple individual filaments having a diameter ranging from 0.45 to 0.65 mm, each filament having a tensile strength of at least -2000D +4050 MPa, where D is the filament diameter in mm.

In another aspect of the invention, the filaments have a tensile strength of at least-2000D+4400 MPa, thus being ultra tensile steel filaments. A preferred tire according to the invention has at least one belt ply wherein the cords are formed of filaments of ultra tensile steel having a diameter of from 0.5 to 0.6 mm, preferably 0.53 to 0.57 mm, such as 0.55 mm.

In another aspect of the invention, the cord has a structure selected from the group consisting of 1x, 2x, 3x, 4x, 5x, 6x, 7x, 8x, 11 x, 12x, 1+2, 1 +3, 1 +4, 1+5, 1+6, 1+7, 1+8, 1+14, 2+2, 2+5, 2+6, 2+7, 2+8, 2+9, 2+10, 2+2+8, 2/2, 2/3, 2/4, 2/5, 2/6, 3+2, 3+3, 3+4, 3+6, 3+9, 3+9+15, 27x, 1+26, 4x4, 5/8/14, 7x2, 12+1, 3+9+1, 1 +6+1, 2+6+1, 2+7+1, 2+8+1, 2+9+1, 2+10+1, 1 +6+12, 2+2+8+1, 3+9+15+1,27+1,1+26+1 and 7x2+1.

The tires disclosed herein may be passenger vehicle tires, light truck tires, including Load Range B, C, D, E, and F tires, or radial medium truck (RMT) tires.

In another aspect of the invention, the belt structure has at least two reinforcing plies and the at least two plies are reinforced with the metallic cords formed of high tensile strength and large filament diameter. Alternatively, for the larger RMT tires, the belt structure may have at least three reinforcing plies and at least two or two of the at least three reinforcing plies are reinforced with the metallic cords.

### Definitions

The following definitions are applicable to the present invention:
"High Tensile Strength Steel (HT)" means a carbon steel with a tensile strength of at least 3400 MPa @ 0.20 mm filament diameter;
"Super Tensile Strength Steel (ST)" means a carbon steel with a tensile strength of at least 3650 MPa @ 0.20 mm filament diameter, and may be characterized by the equation of TS = 4050-2000D, where D is the filament diameter;
"Ultra Tensile Strength Steel (UT)" means a carbon steel with a tensile strength of at least 4000 MPa @0.20 mm filament diameter; and may be characterized by the equation of TS = 4400-2000D, where D is the filament diameter; and
"Mega Tensile Strength Steel (MT)" means a carbon steel with a tensile strength of at least 4500 MPa @ 0.20 mm filament diameter, and may be characterized by the equation of TS = 4900-2000D, where D is the filament diameter.

### Brief Description of the Drawings

The invention will be described by way of example and with reference to the accompanying drawings in which:
FIG. 1 is a pneumatic tire; and
FIGS. 2 - 4 are exemplary cord constructions within the scope of the present invention.

### Detailed Description of the Invention

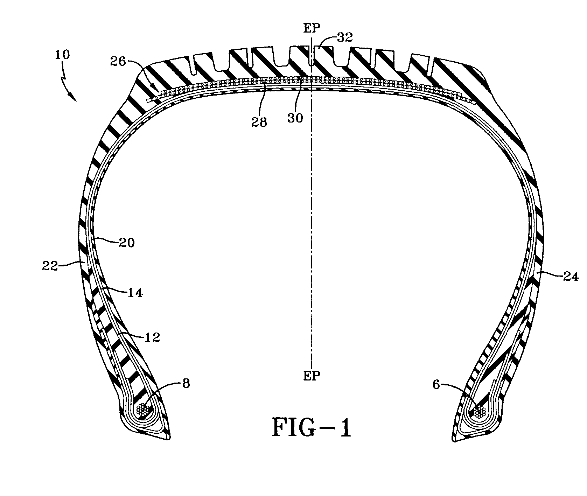

FIG. 1 illustrates a pneumatic tire 10 with a radial carcass. The plies 12, 14 of the carcass have cords preferably oriented at angles in the range of 75° to 90° with respect to the equatorial plane of the tire 10. The tire 10 has a pair of substantially inextensible annular beads 6, 8 that are spaced apart from one another. Each of the beads 6, 8 is located in a bead portion of the tire 10 which has exterior surfaces configured to be complimentary to the bead seats and retaining flanges of a wheel rim (not shown) upon which the tire 10 is designed to be mounted. Plies 12, 14 may be of side-by-side reinforcing cords of polyester, nylon, or other material, or steel cords, and extend between the beads with an axially outer portion of the carcass structure about each of the beads. While the illustrated embodiment of FIG. 1, the carcass ply structure comprises two plies 12, 14 of reinforcing material, it is understood that one or more carcass plies of any suitable material may be employed in conjunction with the present invention.

The tire 10 is a radial medium truck (RMT) tire. RMT tires are generally equipped on over-the-road, cargo vehicles. Such tires have an overall diameter ranging from 30 inches (76.2 cm) to 45 inches (114.3 cm), and most have a diameter in the range of 40 inches (88.9 cm) 45 inches (114.3 cm). Alternatively, the tire 10 may be either a passenger tire or light truck tire; such a tire having an overall maximum diameter of not greater than 35 inches (88.9 cm).

An inner liner 20 of low permeability material is disposed inwardly of the carcass plies 12, 14. Elastomeric sidewalls 22, 24 are disposed axially outwardly of the carcass structure. A circumferentially extending belt structure 26 is radially outward of the carcass plies 12, 14 in the crown region of the tire 10, underlying the tire tread 32. In the illustrated embodiment of FIG. 1, the belt structure 26 is formed of two belt plies 28, 30. The belt plies 28, 30 are illustrated as cut plies; however, one or more of the belt plies may be a folded ply wherein the one or more of the lateral edges of the belt are folded over. The belt plies 28, 30 are formed of calendered steel cords.

In accordance with the invention, the steel cords in at least one of the belt plies 28, 30 are formed of at least one steel filament having a filament diameter in the range of 0.45 to 0.65 mm and have a tensile strength at least equal to -2000D + 4050 MPa, where D is the diameter of the filaments forming the steel cord. Thus, the steel filaments are at least super tensile steel filaments, but instead of reducing the wire diameter to take advantage of the higher strength steel filaments, the diameter of the filaments is increased over conventional diameters. The larger diameter filaments permit the use of fewer filaments in the cords used in the belt structure. Preferably, the filament has a diameter in the range of 0.50 to 0.60 mm, and/or has a tensile strength of at least a super tensile strength steel. Most preferably, the filament has a diameter of 0.55 mm and has a tensile strength of at least an ultra tensile strength steel. The tensile strength of the steel may also be a mega tensile strength steel with a filament diameter of from 0.45 to 0.65 mm, preferably 0.50 to 0.60 mm.

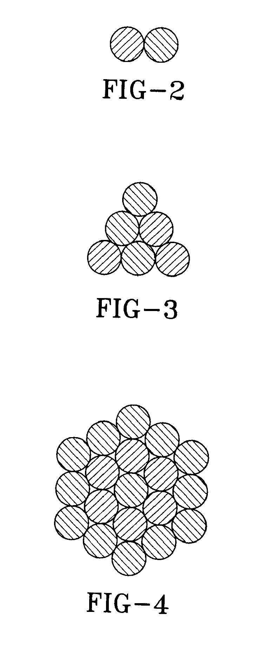

These larger filament cords are most useful in the belt structure to enhance cut resistance properties of the belt structure and exhibit similar strength and ductility as the smaller diameter, larger number of filament cords. For use in the belt structure, preferred cord constructions are 1x, 2x (FIG. 2), 3x, 4x, 5x, 6x, 7x (FIG. 3), 8x, 11x, 12x, 1+2, 1+3, 1+4, 1+5, 1+6, 1+7, 1+8, 1+14, 2+2, 2+5, 2+6, 2+7, 2+8, 2+9, 2+10, 2+2+8, 2/2, 2/3, 2/4, 2/5, 2/6, 3+2, 3+3, 3+4, 3+6, 3+9, 3+9+15, 27x, 1+26, 4x4, 5/8/14, 7x2, 12+1, 3+9+1, 1+6+1, 2+6+1, 2+7+1, 2+8+1, 2+9+1, 2+10+1, 1+6+12 (FIG. 4), 2+2+8+1, 3+9+15+1, 27+1, 1+26+1 and 7x2+1. The number of filaments in the cord is preferably less than 30, and the diameter of the cord is less than 4 mm, preferably less than 3.5 mm.

In the above cord constructions, there is at least one filament having a diameter in the range of 0.45 to 0.65 mm. The cords may be constructed wherein all of the filaments in the cord have a diameter in the above range. The cords may also be constructed wherein all of the filaments have a diameter in the above range, but the filaments in the cord have at least two different diameters; for example, cord 1+6+12 may be constructed as 1x0.65+6x0.45+12x0.45. The cord may even include at least one filament having a diameter greater than 0.65 mm, for example: 1x0.85+6x0.65+12x0.65. For both of these examples, an "open" cable is formed due to the greater diameter of the central filament. The cord may also include a filament having a diameter of less than 0.45 mm; this is most likely for cords of a wrapped construction wherein the +1 wrap cord has a diameter of less than 0.45 mm.

Additionally, any of the above cord constructions may be formed of either distinct layers having different lay lengths or formed as bunched cables wherein the filaments of the different layers are all twisted together at the same time resulting in the same lay length for the different layers.

In one embodiment of the present invention, the belt structure is composed of the two belt plies 28, 30 wherein the cords in both plies are reinforced with cords of the present invention. In another embodiment of the present invention, the belt structure includes a first, second, and third radially overlapped belts wherein the cords of the present invention are used in at least one of the belt plies. In preferred constructions, the outermost ply in the belt structure is the ply comprising the large filament wire cords. In any embodiment of the belt structure, any of the plies may be folded edge plies.

Sample cord constructions were prepared and tested against conventional, comparable cord constructions, see Table 1.

| **Cord Constructions, # of filaments** | | **Breaking Load, N** | **Cord Diameter, mm** | **Steel Area, mm²** | **Filament Tensile Strength, Mpa** |
|---|---|---|---|---|---|
| A | 7x7x0.45 UT, 49 | 25354 | 4.05 | 7.79 | 3255 |
| B | 3+9+15x0.55 UT, 27 | 19677 | 3.30 | 6.41 | 3069 |
| C | 1+6+12x0.65 UT, 19 | 18167 | 3.25 | 6.30 | 2883 |
| D | 1+6+12x0.45 UT, 19 | 9831 | 2.25 | 3.02 | 3255 |
| E | 1+6+12x0.55 UT, 19 | 13847 | 2.75 | 4.51 | 3069 |
| F | 3+9x0.65 UT, 12 | 11474 | 2.60 | 3.98 | 2883 |
| G | 3+9x0.45 UT, 12 | 6209 | 1.80 | 1.91 | 3255 |
| H | 2+7x0.55 UT, 9 | 6559 | 1.93 | 2.14 | 3069 |
| I | 5x0.45 UT, 5 | 2587 | 1.24 | 0.79 | 3255 |
| J | 3+2x0.55 UT, 5 | 3644 | 1.52 | 1.19 | 3069 |
| K | 2+1x0.45 UT, 3 | 1552 | 1.35 | 0.48 | 3255 |
| L | 2x0.55 UT, 2 | 1458 | 1.10 | 0.47 | 3069 |

For cord constructions A-C, cord A is the conventional cord, while cords B and C are potential replacements for cord A. Cord B has 45% less filaments than cord A, but has a breaking load only 22% less than for cord A. Cord C has a 60% reduction in filaments from cord A, with a breaking load only 28% less than cord A.

For cord constructions D-F, cord D is the conventional cord, while cords E and F are potential replacements for cord D. Cord D has the same amount of filaments as cord E, but with a 40% increase in breaking load even though the tensile strength of the filament is reduced. Cord E has 35% fewer cord filaments, but has a 17% increase in breaking load.

For cord constructions G and H, potential replacement cord H has 25% fewer filaments, but a 5% increase in breaking load in comparison to conventional cord G. For cord constructions I and J, potential replacement cord J has the same number of filaments, a reduced filament tensile strength, but a 40% increase in breaking load. For cord constructions K and L, potential replacement cord L has 1/3 fewer filaments, with only a 6% decrease in breaking load.

Several embodiments of the cords formed with the high strength 0.55 diameter filaments were also tested for fatigue properties and found to have acceptable fatigue properties. With comparable steel areas for the larger filament diameter cord constructions, the cords have a lower linear density while providing comparable physical characteristics.

## Claims

1. A pneumatic tire comprising a carcass (32), a tread disposed outward of the carcass, and a belt structure (26) that is interposed between the tread and the carcass, the belt structure (26) comprising at least two reinforcing plies (28, 30) wherein at least one of said at least two reinforcing plies is reinforced with metallic cords, the cords comprising filaments, the tire being **characterized by** at least one filament forming the cord having a diameter (D) ranging from 0.45 to 0.65 mm and having a tensile strength of at least -2000*D+4050 MPa, wherein D is the filament diameter in mm.

2. The tire according to claim 1, wherein the cord has a structure selected from the group consisting of 1x, 2x, 3x, 4x, 5x, 6x, 7x, 8x, 11x, 12x, 1+2, 1+3, 1+4, 1+5, 1+6, 1+7, 1+8, 1+14, 2+2, 2+5, 2+6, 2+7, 2+8, 2+9, 2+10, 2+2+8, 2/2, 2/3, 2/4, 2/5, 2/6, 3+2, 3+3, 3+4, 3+6, 3+9, 3+9+15, 27x, 1+26, 4x4, 5/8/14, 7x2, 12+1, 3+9+1, 1 +6+1, 2+6+1, 2+7+1, 2+8+1, 2+9+1, 2+10+1, 1 +6+12, 2+2+8+1, 3+9+15+1, 27+1, 1+26+1 and 7x2+1.

3. The tire according to claim 1 or 2, wherein the at least one filament has a diameter of ranging from 0.5 to 0.6 mm.

4. The tire according to at least one of the preceding claims, wherein the cord has a structure selected from the group of 3+9+15, 1+6+12, 2+7, 2x, 1x, 3+2.

5. The tire according to at least one of the preceding claims, wherein the total number of filaments in the cord is less than 30.

6. The tire according to at least one of the preceding claims, wherein the overall diameter of the cord is less than 4.00 mm.

7. The tire according to at least one of the preceding claims, wherein the cord has at least one other filament having a diameter greater than 0.65 mm.

8. The tire according to at least one of the preceding claims, wherein the cord has a multiple layer structure and the innermost layer of the cord is formed of the at least one filament.

9. The tire according to at least one of the claims 1 to 8, wherein the cord has a multiple layer structure and all of the filaments forming the cord are formed of the at least one filament, and the filaments forming the innermost layer of the cord have a diameter greater than the diameter of the outer filaments in the cord.

10. The tire according to at least one of the claims 1 to 9, wherein all of the filaments forming the cord are formed of the at least one filament, and wherein the cord is formed of filaments of at least two different diameters in the range of 0.45 to 0.65 mm.
